# EUROPEAN PATENT SPECIFICATION

(11) **EP 0 532 788 B1**
(45) Date of publication and mention of the grant of the patent: **03.12.1997**
(21) Application number: 91115964.8
(22) Date of filing: 19.09.1991
(51) Int. Cl.: C04B 35/26, C04B 35/653

(54) **Method of producing cast magnetic soft ferrite**
Verfahren zur Herstellung von schmelzgegossenem magnetischem Weichferrit
Procédé de production d'un ferrite doux magnétique moulé

(43) Date of publication of application: 24.03.1993
(73) Proprietor: DAIDO TOKUSHUKO KABUSHIKI KAISHA, Naka-ku Nagoya-shi Aichi-ken (JP)
(72) Inventor: Sugimoto, Mitsuo, Nerima-ku, Tokyo (JP); Saito, Akihiko, Nagoya-shi, Aichi-ken (JP)
(74) Representative: Kraus, Walter, Dr.

(56) References cited:
- EP-A- 0 201 132
- JP-A- 3 041 708
- WORLD PATENTS INDEX LATEST Week 9027, Derwent Publications Ltd., London, GB; AN 90-205135 & JP-A-2 135 711 (DAIDO TOKUSHOKO KK) 24 May 1990

## Description

This invention relates to cast magnetic soft ferrite and a method of producing the same.

Magnetic soft ferrite products have been often employed as magnetic recording heads and magnetic cores of various high frequency equipments.

In the majority of conventional methods of producing the magnetic soft ferrite, a mixture of powdery raw materials of a magnetic soft ferrite or a compound as the starting material is obtained by one of the dry method, coprecipitation method and atomization-thermal decomposition method, and the raw material is sintered to get a product. Based on those methods, it is not possible to exceed a certain limit of bulk density of the ferrite. Fluctuations, more or less, of respective conditions in producing steps exert large influences on the high frequency characteristics as well as on magnetic properties of the product. It is therefore difficult to provide stable mass-production of the products exhibiting excellent characteristics.

Certain products of magnetic soft ferrite are in some cases manufactured by cutting out from monocrystals. This method also presents problems of fluctuation of monocrystalline composition and segregation, and in addition to these problems, there is a drawback of large expenditure in manufacturing and machining. For this reason, the magnetic soft ferrites formed of a monocrystalline material are used only in limited applications such as VTR magnetic heads.

One of the inventors has invented a magnetic soft ferrite produced by melting and casting the compounds expressed by a general formula such as MO Fe₂O₃ (wherein M stands for a divalent metal ion) or M'O_{0.5} Fe_{2.5}O₄ (wherein M' stands for a monovalent metal ion) and disclosed it with a method of producing the ferrite (Japanese Patent Application No. 63-289582).

In the first formula given above, for instance, M = Fe and Zn, a compound such as Fe_{0.6}Zn_{0.4}O Fe₂O₃ is useful as a magnetic soft ferrite exhibiting a good magnetic characteristics, particularly, excellent saturation magnetization. When producing this by melting and casting, however, the inventors often experienced that a product having a desired composition could not be obtained.

JP-A-03041708 relates to a method of producing high magnetic permeability ferrite cores, characterized in that sintering of a compacted body of Mg-Zn based ferrite powder is carried out using a case made of a ferrite having the nearly same chemical composition as the compacted body in such a manner that the parts of the case are composed to cover at least the bottom and the sides of the compacted body.

It is the object of the present invention to provide, in the producing magnetic soft ferrite expressed by the general formula of MₓZn₁₋ₓO Fe₂O₃ by melting and casting, a method of producing a product as desired by depressing fluctuations in the composition.

All the drawings are vertical sectional views each illustrating the principal portion of construction of an experimental equipment used for melting the magnetic soft ferrite and casting it. Fig. 1 shows the principle of heating and melting method by using an electric furnace; Fig. 2 shows the principle of suspension-melting method; Fig. 3 shows the principle of the electron beam melting method; and Fig. 4 shows the principle of the continuous casting.

In accordance with the present invention, there is provided a method of producing cast magnetic soft ferrite, comprising the steps of heating a material consisting of the compound expressed by the general formula: MₓZn₁₋ₓO Fe₂O₃ (wherein M Stands for one or more of the metals selected from Cu, Mn, Ni, Fe, Co and Mg) or a mixture of the component oxides corresponding to the above composition; while disposing a Zn supply source containing Zn or a Zn compound around the above mentioned starting material of the magnetic soft ferrite to allow existence of the surrounding gas containing Zn component during the course of melting; and solidifying the obtained molten substance in a desired shape, typically, by pouring the molten substance into a mold.

As the Zn supply source it is preferable to use a Zn compound having a melting point higher than that of a ferrite (approximately 1600-1700°C) which is to be produced by melting. However, other Zn compounds each having a melting point lower than the melting points of the ferrites may also be used. Specific Zn supply source substances are exemplified as follows. Melting points (°C) are shown by numerals in the parentheses [ ] marked therein, while boiling points (°C) are indicated by numerals in the parentheses ( ).

| | |
|---|---|
| | Zn [420] (907) |
| ZnO [to 2000, under pressure] | ZnO·Al₂O₃ [1949] |
| ZnO·SiO₂ [1526] | 2ZnO·SiO₂ [1580 or above] |
| ZnO·Fe₂O₃ [1588] | 2ZnO·TiO₂ [1580 or above] |
| ZnO·WO₃ [1580 or above] | ZnSeO₃ [529] |
| K₂O·ZnO 2SiO₂ [1427] | 3ZnO·Nb₂O₅ [1307] |
| ZnSe [>1100] | ZnTe [704] |
| Zn₃P₂ [371] | Zn₃P₂ [823] |
| Zn₃As₂ [698] | ZnSb [439] |

In carrying out the casting, the description of the mold in the previous invention is applicable also to the present invention. More specifically, a material of the mold is selected preferably from Pt-Rh alloys or Ir-alloys or sintered bodies of lithium aluminium silicide, magnesium aluminium silicide, SiC, Si₃N₄, Si₄Al₂O₂N₆, TiB₂, ZrB₂, BN, B4C, TiC, ZrC, TiN, ZrN, TiO₂ or Al₂O₃.

The mold is preheated at a temperature ranging from 200°C to 800°C preparatory to its use, and after the molten substance is injected, it is appropriate to cool the mold at a rate of 300-1800°C/hr to solidify the melt.

To facilitate the separation of the cast from the mold after casting, it is recommended to coat the inner face of the mold with a porous ceramics, with a ceramics which becomes porous by heating, or with a ceramics which breakes down by oxidation.

When carrying out this invention, as will be seen in the Examples which are described later, a variety of attempts can be made.

It has been found that the fluctuatation of the chemical composition of the product when producing the ferrite of MₓZn₁₋ₓO·Fe₂O₃ by melting and casting is due to the fact that vapor pressure of the Zn component is high and the component is apt to volatil. Then, we have adopted supplying Zn from a Zn source as a means for suppressing the evaporation by maintaining a constant Zn partial pressure in the surrounding gas atmosphere. The Zn partial pressure in the surrounding gas atmosphere should have a magnitude enough to counteract the Zn partial pressure caused by Zn evaporation from the ferrite material. Hence, it is required that the materials of Zn supply source are selected depending on the composition of the ferrite material to be melted and the temperature at which the ferrite material is melted. Besides, it is preferable to provide the Zn supply source for supplying Zn having a sufficient quantity for the total amount of the ferrite material to be melted. As the result of a variety of experiments, it was found that the Zn supply source having a higher melting point brings about a less amount of Zn loss caused by the evaporation, and therefore, these materials are useful. Also, it was found that, even in the case of using the Zn supply source having a lower melting point, the Zn supply source can be effectively used by strictly controlling the supply quantity so that it may not be excessive in relation to the amount of the ferrite material or by releasing out the excessive vapor of Zn component by a certain way.

It will be easily understood that, when the melting is carried out, sealing up the melting chamber or covering the crucible for melting is advantageous in terms of suppressing evaporation of Zn. An upper space in the crucible is preferably as small as possible. That is, reducing the upper space in the crucible serves to minimize the influences on the change of composition of the product even if the Zn component volatiles from the material in the crucible.

Putting the gas atmosphere surrounding the melt under the pressurized condition exhibits a large effect in terms of suppresing the volatilization of the Zn component. As the atmosphere gas, O₂, N₂, Ar and air or a mixed gas thereof at any ratios can be used. The effect of pressurization can be seen even with approximately 1-2kg/cm²G, however, it becomes more conspicuous with a higher pressure. It is, however, necessary to cope with a various problems when the pressure-proof property of the melting equipment up to an extremely high pressure is intended. The present inventors constructed an experimental equipment which works at a pressure up to 30kg/cm², and carried out various tests relative to this invention to obtain good results.

### (Examples 1-5, Control Examples 1-4)

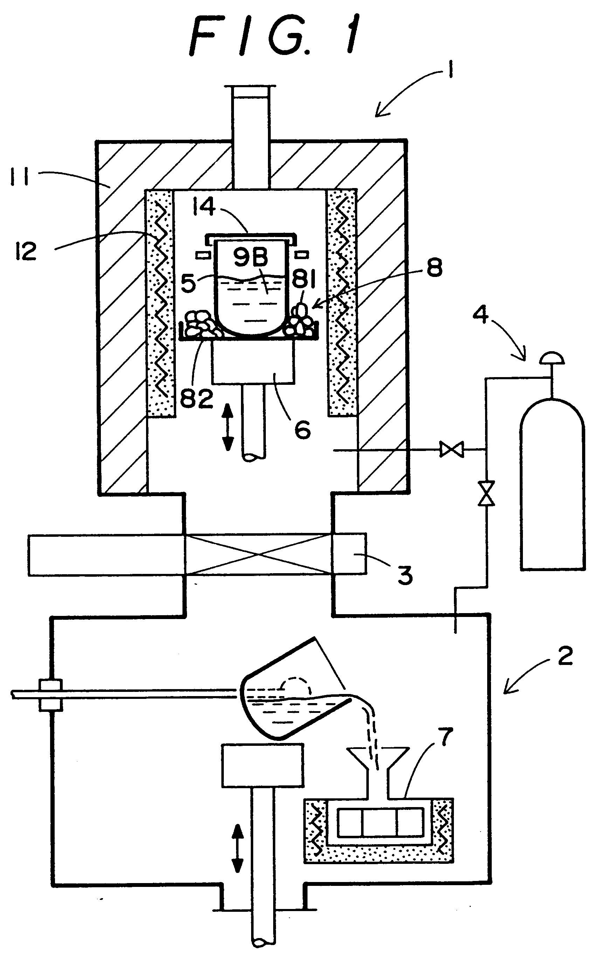

The experimental equipment as shown in Fig. 1. was constructed, and melting and casting magnetic soft ferrites were carried out.

In the Figure, the numeral (1) represents a melting chamber; (2) a casting chamber; (3) a flat valve for sectioning the two chambers; and (4) a means for adjusting atmospheres, especially, gas pressures in the two chambers. The melting chamber is an electric furnace lined with a refractory thermal insulator (11) and equipped with heater (12). Temperatures in the furnace is adjustable up to 1800°C so that a raw material in a Pt-Rh alloy crucible (5) may be melted to obtain a molten magnetic soft ferrite (9B). Designated with (8) is a means for supplying Zn consisting of a Zn supply source (81) and a container (82). The container (82) may be composed of an ordinary refractory material on condition that the material is durable at the melting temperature but does not react to the Zn supply source (81). Preferably, however, a Pt-Rh alloy is used. Numeral (14) indicates a lid of the crucible, which is constructed to close the crucible as tight as possible.

The molten substance drops down into the casting chamber by manipulating a crucible support board. The molten substance is then poured into a mold (7) by inclining the crucible (5) with an inclining bar. The mold is equipped with a heater and is therefore preheated at a desired temperature, and is also capable of controlling cooling speed.

The raw materials of magnetic soft ferrites having compositions shown in the Table were melted and cast under the conditions stated in the Table by employing the experimental equipment described above. The cast products were in the form of round bars. The mold used is made of Pt-Rh.

The magnetic properties of the obtained cast product were measured. At the same time Zn contents of the products were determined so as to ascertain whether the compositions thereof were as expected.

The results are also shown in the Table.

### (Example 6)

Powder of the magnetic soft ferrite used as the raw material in Example 1 was mixed and kneaded with a binder composed mainly of polyvinyl butyral. The kneaded substance underwent compaction into a cylindrical body having a diameter of 15mm.

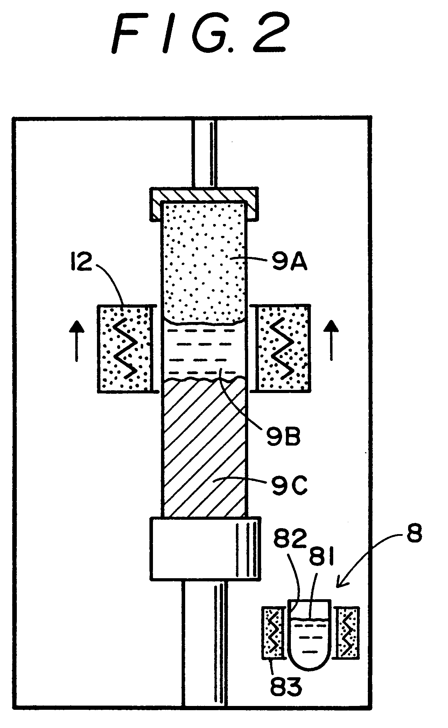

The compacted body was heated by an equipment shown in Fig. 2 and melted by suspension melting method to obtain a magnetic soft ferrite. More specifically, as can be seen in the Figure, a compact of a ferrite material (9A) was fixed, and a ring-shaped heater (12) surrounding the compact moved slowly upwards from under. With this movement, a melted zone of the ferrite (9B) made by heating moved upwards from under, and thus, the solidified magnetic soft ferrite (9C) remains there. When performing this suspension melting, as illustrated in the Figure, the Zn supply means (8) was provided, and the surrounding gas atmosphere was adjusted to have an appropriate partial pressure of Zn vapor. The Zn supply means (indicated by (81), ZnO·Fe₂O₃ was also used in this example) in the container (82) was heated by a heater (83) at a suitable temperature. The Zn partial pressure in the surrounding gas atmosphere can be thereby controlled.

According to this method, the magnetic soft ferrite product solidified without being cast. The ferrite product was obtained in the form of a cylindrical body having a diameter a little smaller than that of the original compact.

### (Example 7)

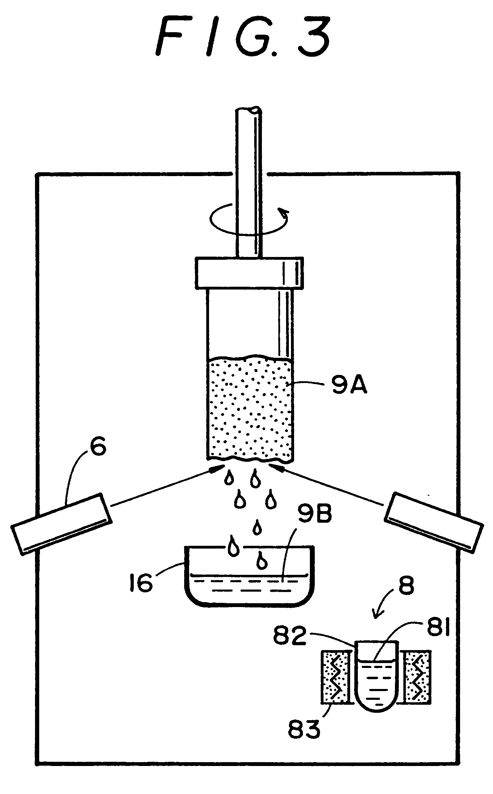

The compact of the same magnetic soft ferrite material as used in Example 6 was melted with the equipment illustrated in Fig. 3 to obtain a molten ferrite. Referring to Fig. 3, the numeral (6) represents an electron beam irradiation means. Heating energy of electron beams was given to the ferrite material (9A) to melt it, and the melted ferrite droped down. As a result, the molten ferrite (9B) was formed in a container (16) made of a Pt-Rh alloy. Also in this case, the Zn supply means (8) was used.

If the heating energy enough to melt the ferrite material can be irradiated, infrared rays may be used as a melting means in place of the electron beams.

### (Example 8)

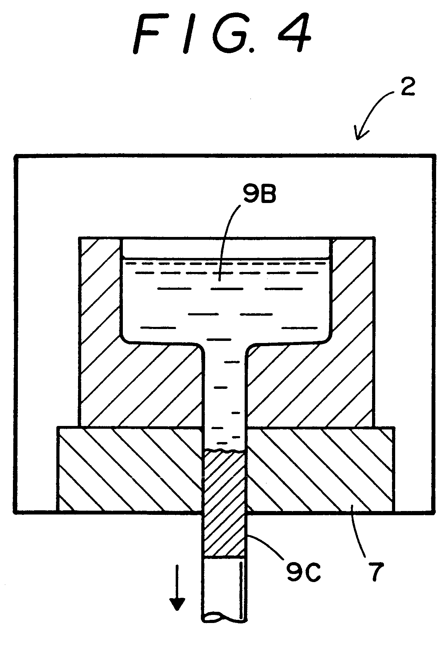

The molten magnetic soft ferrite continuously formed in Example 7 was continuously cast with an equipment illustrated in Fig. 4. At the begining of forming the molten ferrite, a ferrite bar made of the same material was inserted in the bottom of the casting chamber, and when the molten ferrite accumulated to a certain amount, this bar was slowly pulled down. A bar shaped cast body, which was a ferrite solid body (9C) pursuant to the hole section of the mold (7), was obtained.

Tables 1 and show the results of Examples 6-8 together with those of Examples 1-5.

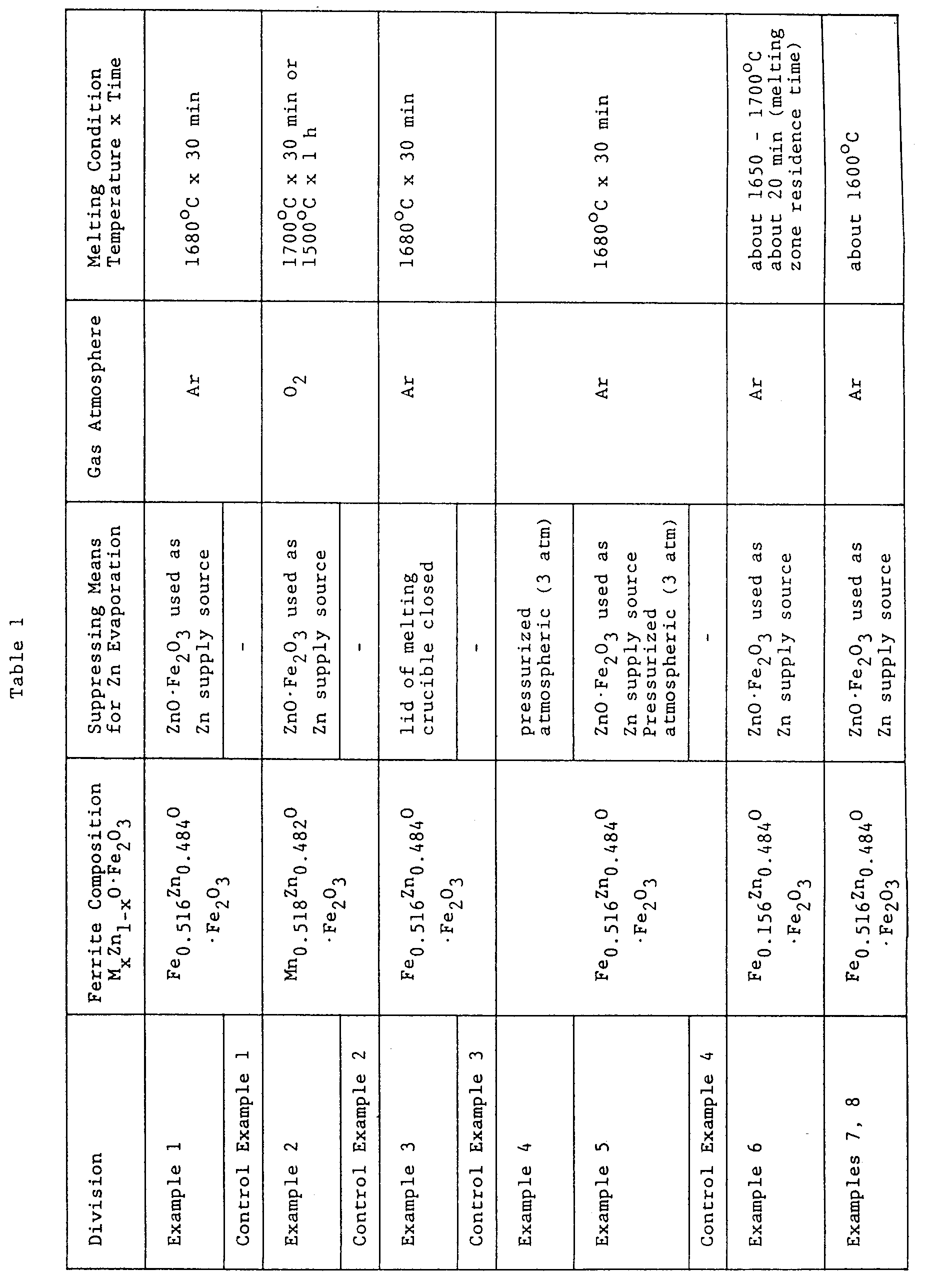

**Table 2**

| | Intra-ferrite Zn (%) | | Magnetization Value measured at 10KOe (emu/g) |
|---|---|---|---|
| | Expected Value | Observed Value | |
| Example 1 | 11.1 | 11.2 | 96 |
| Control Example 1 | | 0.2 | 70 |
| Example 2 | 12.5 | 12.0 | 101 |
| Control Example 2 | | 0.1 | 56 |
| Example 3 | 11.1 | 10.9 | 92 |
| Control Example 3 | | 0.2 | 61 |
| Example 4 | 11.1 | 11.0 | 110 |
| Example 5 | | 11.0 | 115 |
| Control Example 4 | | 0.5 | 72 |
| Example 6 | 11.9 | 11.9 | 109 |
| Examples 7, 8 | 11.1 | 11.0 | 105 |

As described above, the present invention facilitates, in the case where the magnetic soft ferrite of MₓZn₁₋ₓO·Fe₂O₃ is produced by casting, to control the Zn content of the ferrite and obtain a product with a uniform composition and realizing the lowest fluctuations of magnetic properties.

The products made by the melt casting according to the present invention have higher specific densities than that of the products made by the conventional powder metallurgy. It has been ascertained that the products with very fine crystalline grains are excellent in terms of the magnetic properties and high frequency characteristics. Besides, the process of producing according to this invention is more simplified than in the conventional methods. Control of the processes is easy, and hence, the present method is characterized by the fact that the products with very small variation of quality can be offered at reduced costs. Therefore, the present invention with new characteristics greatly contributes to development in the ferrite industry.

## Claims

1. A method of producing cast magnetic soft ferrite expressed by the general formula MₓZn₁₋ₓO·Fe₂O₃, wherein M represents one or more of the materials selected from Cu, Mn, Ni, Fe, Co and Mg; and x is in the range of 0.4-0.7, by heating a material consisting of a compound of the above formula or a mixture of the component oxides corresponding to the above composition to a temperature of 1500-1900°C to melt, and by casting the molten material; characterized in that a Zn supply source consisting of a Zn compound is disposed around said material of the soft ferrite during heating to allow existence of the Zn compound in the surrounding gas; that a gas giving no substantial effect on the material for the soft ferrite is used as the surrounding gas, which is kept under pressure, so as to suppress evaporation of Zn component in the material during melting; and that the molten material is solidified by being cast into a desired shape.

2. A method of producing cast magnetic soft ferrite according to claim 1, characterized in that one or more of the substances selected from the group consisting of ZnO·Al₂O₃, ZnO·SiO₂, 2ZnO·TiO₂ and ZnO·WO₃ having a melting point higher than the melting point of the material for the magnetic soft ferrite is used as the Zn supply source.

3. A method of producing cast magnetic soft ferrite according to claim 1, characterized in that one or more of the substances selected from the groups consisting of ZnO·SiO₂, K₂O·ZnO·SiO₂, 2CaO·ZnO·2SiO₂, 3ZnO·Nb₂O₅, ZnSeO₃, ZnSb, ZnTe, Zn₃N₂, Zn₃P₂ and Zn₃·As₂ having a melting point lower than the melting point of the material for the magnetic soft ferrite is used as the Zn supply source.

## Patentansprüche

1. Verfahren zur Herstellung von schmelzgegossenem magnetischem Weichferrit, der allgemeinen Formel MₓZn₁₋ₓO·Fe₂O₃, worin M für ein oder mehrere Materialien, ausgewählt aus Cu, Mn, Ni, Fe, Co und Mg, steht, und x im Bereich von 0,4-0,7 liegt, durch Erhitzen eines Materials bestehend aus einer Verbindung der obigen Formel oder einem Gemisch der Oxidkomponenten, die der obigen Zusammensetzung entsprechen, auf eine Temperatur von 1500 bis 1900°C zum Schmelzen, und Gießen des geschmolzenen Materials, dadurch **gekennzeichnet,** daß eine Zn-Quelle, die aus einer Zn-Verbindung besteht, um das Material des Weichferrits während des Erhitzens angeordnet wird, um das Vorhandensein der Zn-Verbindung in dem umgebenden Gas zu gewährleisten, daß ein Gas, das keinen wesentlichen Einfluß auf das Material für den Weichferrit hat, als umgebendes Gas verwendet wird, das unter Druck gehalten wird, um die Verdampfung der Zn-Komponente in dem Material während des Schmelzens zu unterdrücken, und daß das geschmolzene Material verfestigt wird, indem es in eine gewünschte Form gegossen wird.

2. Verfahren zur Herstellung des schmelzgegossenen magnetischen Weichferrits nach Anspruch 1, dadurch **gekennzeichnet,** daß eine oder mehrere Substanzen, ausgewählt aus der Gruppe bestehend aus ZnO·Al₂O₃, ZnO·SiO₂, 2ZnO·TiO₂ und ZnO·WO₃, mit einem Schmelzpunkt höher als der Schmelzpunkt des Materials für den magnetischen Weichferrit als Zn-Quelle verwendet wird.

3. Verfahren zur Herstellung des schmelzgegossenen magnetischen Weichferrits nach Anspruch 1, dadurch **gekennzeichnet,** daß eine oder mehrere Substanzen, ausgewählt aus der Gruppe bestehend aus ZnO·SiO₂, K₂O·ZnO·SiO₂, 2CaO·ZnO·2SiO₂, 3ZnO·Nb₂O₅, ZnSeO₃, ZnSb, ZnTe, Zn₃N₂, Zn₃P₂ und Zn₃·As₂, mit einem Schmelzpunkt höher als der Schmelzpunkt des Materials für den magnetischen Weichferrit als Zn-Quelle verwendet wird.

## Revendications

1. Procédé pour la production d'un ferrite doux magnétique moulé, représenté par la formule générale MₓZn₁₋ₓO·Fe₂O₃, dans laquelle M représente un ou plusieurs des matériaux choisis parmi Cu, Mn, Ni, Fe, Co et Mg, et x est compris dans la gamme de 0,4 à 0,7, par chauffage d'un matériau consistant en un composé de formule ci-dessus ou en un mélange des oxydes composants correspondant à la composition ci-dessus à une température de 1500°C à 1900°C pour le faire fondre, et par moulage du matériau fondu, caractérisé en ce qu'une source d'alimentation de Zn consistant en un composé de Zn est disposée autour de ce matériau de ferrite doux pendant le chauffage pour permettre la présence du composé de Zn dans le gaz environnant, qu'un gaz n'entraînant aucun effet notable sur le matériau pour le ferrite doux est utilisé en tant que gaz environnant, qui est maintenu sous pression de façon à supprimer l'évaporation du composant Zn dans le matériau pendant la fusion, et que le matériau fondu est solidifié par moulage en une forme désirée.

2. Procédé pour la production d'un ferrite doux magnétique moulé suivant la revendication 1, caractérisé en ce qu'une ou plusieurs des substances choisies dans le groupe consistant en ZnO·Al₂O₃, ZnO·SiO₂, 2ZnO·TiO₂ et ZnO·WO₃, ayant un point de fusion supérieur au point de fusion du matériau pour le ferrite doux magnétique, sont utilisées en tant que source d'alimentation de Zn.

3. Procédé pour la production d'un ferrite doux magnétique moulé suivant la revendication 1, caractérisé en ce qu'une ou plusieurs des substances choisies dans le groupe consistant en ZnO·SiO₂, K₂O·ZnO·SiO₂, 2CaO·ZnO·2SiO₂, 3ZnO·Nb₂O₅, ZnSeO₃, ZnSb, ZnTe, Zn₃N₂, Zn₃P₂ et Zn₃As₂ ayant un point de fusion inférieur au point de fusion du matériau pour le ferrite doux magnétique, sont utilisées en tant que source d'alimentation de Zn.
